# EUROPEAN PATENT SPECIFICATION

(11) **EP 4 083 099 B1**
(45) Date of publication and mention of the grant of the patent: **23.07.2025**
(21) Application number: 20905451.9
(22) Date of filing: 21.12.2020
(51) Int. Cl.: C08F 297/02, C08L 27/06, C08L 53/00, C08L 33/12

(54) **VINYL CHLORIDE RESIN COMPOSITION AND MOLDED ARTICLE**
VINYLCHLORIDHARZZUSAMMENSETZUNG UND GEFORMTER GEGENSTAND
COMPOSITION DE RÉSINE DE CHLORURE DE VINYLE ET ARTICLE MOULÉ

(30) Priority: 26.12.2019 JP 2019236786
(43) Date of publication of application: 02.11.2022
(73) Proprietor: Kuraray Co., Ltd., Kurashiki-shi, Okayama 710-0801 (JP)
(72) Inventor: KAWAHARA, Moe, Tsukuba-shi, Ibaraki 305-0841 (JP); AKAI, Makoto, Tsukuba-shi, Ibaraki 305-0841 (JP); ONO, Tomohiro, Tsukuba-shi, Ibaraki 305-0841 (JP)
(74) Representative: Müller-Boré & Partner Patentanwälte PartG mbB
(86) International application number: PCT/JP2020/047595
(87) International publication number: WO 2021/132119

(56) References cited:
- EP-A1- 1 669 406
- WO-A1-2016/167292
- WO-A1-2017/179415
- JP-A- 2006 274 132
- JP-A- 2009 067 930
- JP-A- 2017 078 137
- JP-A- 2017 078 137
- JP-A- 2018 514 649
- JP-A- 2019 094 402
- JP-A- 2020 132 657
- JP-A- 2020 169 295
- JP-A- H08 199 030

## Description

### TECHNICAL FIELD

The present invention relates to vinyl chloride resin compositions and to shaped articles formed of the composition.

### BACKGROUND ART

Vinyl chloride resin compositions, particularly so-called soft vinyl chloride resin compositions having a type A durometer hardness of about 50 to 100 as measured in accordance with JIS K6253-3: 2012, have excellent processability and mechanical characteristics, and are therefore used in a wide range of applications including building materials, automobile materials and electric/electronic materials in the form of shaped articles such as covers, films and sheets. In consideration of flexibility and shaping properties, such soft vinyl chloride resin compositions usually tend to contain a large amount of a plasticizer.

Unfortunately, plasticizers contained in soft vinyl chloride resin compositions sometimes cause problems of migration and fogging (fog stemming from the plasticizer). Further, thermal aging resistance may become a problem at least partially due to the characteristics of the plasticizer.

A possible approach to imparting flexibility to vinyl chloride resin compositions is to use a soft material having relatively high affinity for vinyl chloride resins, for example, an acrylic soft polymer material such as an acrylic block copolymer. For example, studies have been carried out to reduce the occurrence of burn marks and die buildup and to improve extrudability of resin compositions used for flexible tubes. Specifically, such studies have developed a resin composition that includes polyvinyl chloride, a specific plasticizer and a specific acrylic polymer resin as a lubricant in specific proportions (see, for example, Patent Literature 1).

Patent Literature 2 describes in Examples 1 and 2 two compositions of PVC, block copolymer B-1 and 3 parts per 100 parts PVC of Metablen P-530A. The block copolymer B-1 is a triblock copolymer of the structure b2-b1-b2, whereby the block b1 is poly-n-butyl acrylate and the block b2 is PMMA, the weight ratio b1/b2 is of 76/24, the Mw of the polymer is 76,000 and it Mw/Mn is 1.08.

### CITATION LIST

### PATENT LITERATURE

Patent Literature 1: JP-A-2015-166608
Patent Literature 2: JP-A-2017-078137

### SUMMARY OF INVENTION

### TECHNICAL PROBLEM

The acrylic polymer resin used in the composition of Patent Literature 1 mainly serves to improve the contact friction of the hard vinyl chloride resin composition. That is, this acrylic polymer resin is not used as a material that will impart flexibility to a soft vinyl chloride resin composition.

When a vinyl chloride resin is combined with an acrylic block copolymer having excellent flexibility to form a soft vinyl chloride resin composition, the acrylic block copolymer needs to be added in a large amount relative to the amount of the vinyl chloride resin. Generally, vinyl chloride resin compositions are prepared by melt-kneading. Because the melt behavior (for example, the temperature dependence of melt viscosity) of a vinyl chloride resin and that of an acrylic block copolymer differ relatively largely from each other, simple melt-kneading of these two materials will not give a uniformly kneaded mixture. Thus, it has been difficult to prepare a soft vinyl chloride resin composition including an acrylic block copolymer while ensuring that the composition will have stable characteristics.

An object of the present invention is to provide a vinyl chloride resin composition that benefits from excellent kneadability between a vinyl chloride resin and an acrylic block copolymer during a process such as melt-kneading for the preparation of the composition, and consequently attains improvements in thermal aging resistance, migration resistance, fogging resistance, electrical characteristics and printability without deterioration in the conventional high performance in flexibility, resistance to whitening on bending, and low-temperature characteristics of vinyl chloride resin compositions, particularly soft vinyl chloride resin compositions. Another object of the present invention is to provide a shaped article formed of the vinyl chloride resin composition.

### SOLUTION TO PROBLEM

The present invention having the above objects pertains to a vinyl chloride resin composition comprising a vinyl chloride resin (A), an acrylic block copolymer (B) comprising a polymer block (b1) including acrylic acid ester units and a polymer block (b2) including methacrylic acid ester units, and a gelation accelerator (C), wherein the weight average molecular weight of the acrylic block copolymer (B) is in the range of 100,000 to 250,000, the content of the polymer block (b2) in the acrylic block copolymer (B) is in the range of 10 to 25 mass%, and the vinyl chloride resin composition contains 20 to 150 parts by mass of the acrylic block copolymer (B) and 4 to 18 parts by mass of the gelation accelerator (C) with respect to 100 parts by mass of the vinyl chloride resin (A);

The acrylic block copolymer (B) is preferably a triblock copolymer in which two of the polymer blocks (b2) are bonded to respective ends of the polymer block (b1); the molecular weight distribution of the acrylic block copolymer (B) is preferably in the range of 1.0 to 1.4. Also provided by the invention is a shaped article comprising the vinyl chloride resin composition

### ADVANTAGEOUS EFFECTS OF INVENTION

The vinyl chloride resin composition according to the present invention benefits from excellent kneadability between a vinyl chloride resin and an acrylic block copolymer during the preparation of the composition, and consequently attains improvements in thermal aging resistance, migration resistance, fogging resistance, electrical characteristics and printability without deterioration in the conventional high performance in flexibility, resistance to whitening on bending, and low-temperature characteristics of vinyl chloride resin compositions. The shaped article of the present invention is formed from the vinyl chloride resin composition.

### DESCRIPTION OF EMBODIMENTS

The present invention will be described in detail hereinbelow. In the present specification, "(meth)acrylic acid ester" is a general term for "methacrylic acid ester" and "acrylic acid ester", and "(meth)acrylic" is a general term for "methacrylic" and "acrylic".

### <Vinyl chloride resin (A)>

A vinyl chloride resin (A) that is a constituent of a vinyl chloride resin composition of the present invention is a resin principally including vinyl chloride units, and is obtained by polymerizing a monomer(s) including vinyl chloride. The vinyl chloride resin (A) is preferably a resin containing vinyl chloride units in an amount of 50 mass% or more, more preferably 70 mass% or more, and still more preferably 90 mass% or more. Examples of the vinyl chloride resins (A) include vinyl chloride homopolymer (polyvinyl chloride) and vinyl chloride copolymers.

Examples of the comonomers for forming constituent units other than vinyl chloride units in the vinyl chloride copolymers include α-olefins such as ethylene and propylene; vinyl ethers such as vinyl acetate and alkyl vinyl ethers; acrylic acid esters; methacrylic acid esters such as methyl methacrylate; acrylamides, methacrylamides, acrylonitriles, methacrylonitriles, maleimides, vinylidene chlorides and styrenes. The comonomers may be used singly, or two or more may be used in combination. The content of the comonomer units in the vinyl chloride copolymer is preferably 50 mass% or less, more preferably 30 mass% or less, and still more preferably 10 mass% or less.

The polymerization degree of the vinyl chloride resin (A) may be selected appropriately in accordance with factors such as use application, but is usually in the range of 100 to 10000, and, from points of view such as shaping properties, is preferably in the range of 400 to 5000, more preferably 800 to 2000, and still more preferably 1000 to 1300. The vinyl chloride resins may be used singly, or two or more may be used in combination.

The vinyl chloride resin may be a vinyl chloride homopolymer, a vinyl chloride copolymer, a mixture of these polymers, or a mixture of any of these polymers with an additional resin. Examples of such additional resins include ethylene-vinyl acetate copolymer resins, acrylonitrile-butadiene-styrene copolymer resins, acrylonitrile-butadiene copolymer resins, polyurethane resins, chlorinated polyurethane resins and polymethyl methacrylate resins. The content of the additional resin in the vinyl chloride resin is preferably 10 mass% or less.

### <Acrylic block copolymers (B)>

An acrylic block copolymer (B) that is a constituent of the vinyl chloride resin composition of the present invention includes a polymer block (b1) including acrylic acid ester units and a polymer block (b2) including methacrylic acid ester units.

### (Polymer blocks (b1))

The polymer block (b1) includes acrylic acid ester units. By virtue of the polymer block (b1) including acrylic acid ester units, the phase separation between the polymer block (b1) and the polymer block (b2) described later tends to become clearer, and excellent flexibility and adhesion stemming from the polymer block (b1) are obtained. The acrylic acid ester units are largely classified into acrylic acid ester (b1-1) units represented by the general formula CH₂=CH-COOR¹ (1) (in the formula (1), R¹ denotes a C1-C3 organic group), acrylic acid ester (b1-2) units represented by the general formula CH₂=CH-COOR² (2) (in the formula (2), R² denotes a C4-C6 organic group), acrylic acid ester (b1-3) units represented by the general formula CH₂=CH-COOR³ (3) (in the formula (3), R³ denotes a C7-C12 organic group), and acrylic acid ester (b1-4) units other than the acrylic acid esters (b1-1), (b1-2) and (b1-3).

Examples of the acrylic acid esters (b1-2) include acrylic acid esters having no functional groups such as n-butyl acrylate, isobutyl acrylate, sec-butyl acrylate, tert-butyl acrylate, n-pentyl acrylate, isopentyl acrylate, n-hexyl acrylate, cyclohexyl acrylate and phenyl acrylate; and acrylic acid esters having a functional group such as ethoxyethyl acrylate, diethylaminoethyl acrylate and tetrahydrofurfuryl acrylate.

When the polymer block (b1) includes acrylic acid ester (b1-2) units, the vinyl chloride resin composition that is obtained tends to be excellent in flexibility.

Among those described above, acrylic acid esters having no functional groups are preferable, and n-butyl acrylate and n-hexyl acrylate are more preferable, for the reason that the vinyl chloride resin composition that is obtained attains enhancements in flexibility, cold resistance and low-temperature characteristics. To increase the compatibility with the vinyl chloride resin, n-butyl acrylate is more preferable. The acrylic acid esters (b1-2) may be used singly, or two or more may be used in combination.

Examples of the acrylic acid esters (b1-3) include 2-ethylhexyl acrylate, n-octyl acrylate, isooctyl acrylate, decyl acrylate, isobornyl acrylate, lauryl acrylate, benzyl acrylate and phenoxyethyl acrylate. When the polymer block (b1) includes acrylic acid ester (b1-3) units, the copolymer tends to exhibit enhanced compatibility with a low-polarity component (for example, a low-polarity plasticizer) present in the vinyl chloride resin composition.

Among those described above, such acrylic acid esters as 2-ethylhexyl acrylate, n-octyl acrylate, isooctyl acrylate, lauryl acrylate and phenoxyethyl acrylate are preferable for the reason that the vinyl chloride resin composition that is obtained attains enhancements in flexibility, cold resistance and low-temperature characteristics. To ensure that the vinyl chloride resin composition that is obtained will have excellent flexibility at low temperatures (-40 to 10°C) and will exhibit excellent adhesion to other materials, 2-ethylhexyl acrylate, n-octyl acrylate and isooctyl acrylate are more preferable. Further, 2-ethylhexyl acrylate is particularly preferable for the reason that the phase separation between the polymer block (b1) and the polymer block (b2) becomes clearer and the vinyl chloride resin composition exhibits a particularly high cohesive force. The acrylic acid esters (b1-3) may be used singly, or two or more may be used in combination.

Examples of the acrylic acid esters (b1-1) include acrylic acid esters having no functional groups such as methyl acrylate, ethyl acrylate, n-propyl acrylate and isopropyl acrylate; and acrylic acid esters having a functional group such as 2-methoxyethyl acrylate, 2-hydroxyethyl acrylate, 2-aminoethyl acrylate and glycidyl acrylate.

When the polymer block (b1) includes acrylic acid ester (b1-1) units, the copolymer tends to exhibit enhanced compatibility with a high-polarity component (for example, a plasticizer) present in the vinyl chloride resin composition, and, even in the case where the vinyl chloride resin composition contains such a component as a plasticizer, the amount of the plasticizer migrating from the vinyl chloride resin composition tends to be small. Further, when the polymer block (b1) includes acrylic acid ester (b1-1) units, the compatibility with the vinyl chloride resin is enhanced and good transparency tends to be obtained while maintaining the impact resistance. Among those described above, acrylic acid esters having no functional groups are preferable, methyl acrylate and ethyl acrylate are more preferable, and methyl acrylate is still more preferable, from the point of view of enhancing the impact resistance and the transparency of the vinyl chloride resin composition that is obtained. Further, ethyl acrylate and methyl acrylate are preferable, and methyl acrylate is more preferable, to ensure that low tackiness and flexibility will be enhanced while maintaining low-temperature characteristics. The acrylic acid esters (b1-1) may be used singly, or two or more may be used in combination.

Examples of the acrylic acid esters (b1-4) include pentadecyl acrylate and stearyl acrylate. The acrylic acid esters (b1-4) may be used singly, or two or more may be used in combination.

The acrylic acid ester units contained in the polymer block (b1) may be derived from a single kind of an acrylic acid ester, or may be obtained from two or more kinds of acrylic acid esters. Among the acrylic acid esters described above, the acrylic acid esters (b1-1), the acrylic acid esters (b1-2) and the acrylic acid esters (b1-3) are preferable, and the acrylic acid esters (b1-1) and the acrylic acid esters (b1-2) are more preferable, for reasons such as because the vinyl chloride resin composition that is obtained exhibits excellent fluidity and plasticity during processes such as shaping, because the occurrence of defects such as burn marks and die buildup is reduced more efficiently to offer higher surface quality, and because the copolymer has excellent compatibility with the vinyl chloride resin (A).

In a preferred embodiment, the polymer block (b1) includes acrylic acid ester (b1-2) units. To ensure that the vinyl chloride resin composition that is obtained will attain further enhanced flexibility, the proportion of the acrylic acid ester (b1-2) units contained in the polymer block (b1) is preferably 50 mass% or more, more preferably 60 mass% or more, still more preferably 80 mass% or more, further preferably 90 mass% or more, and particularly preferably 100 mass% of the polymer block (b1).

In a preferred embodiment, the polymer block (b1) includes acrylic acid ester (b1-2) units and acrylic acid ester (b1-3) units. In that case, the mass ratio (b1-2)/(b1-3) of the acrylic acid ester (b1-2) units to the acrylic acid ester (b1-3) units in the polymer block (b1) is preferably 80/20 to 20/80, more preferably 70/30 to 30/70, and still more preferably 60/40 to 40/60 for reasons such as because the vinyl chloride resin composition that is obtained exhibits good flexibility at low temperatures and high adhesion to other materials. The respective contents of the acrylic acid ester units in the polymer block (b1) may be determined by a method such as ¹H-NMR measurement. When the polymer block (b1) includes acrylic acid ester (b1-2) units and acrylic acid ester (b1-3) units, a preferred combination of the acrylic acid esters is n-butyl acrylate/2-ethylhexyl acrylate.

In another preferred embodiment, the polymer block (b1) includes acrylic acid ester (b1-2) units and/or acrylic acid ester (b1-3) units, and includes acrylic acid ester (b1-1) units. When the acrylic acid ester units in the polymer block (b1) include acrylic acid ester (b1-2) units and/or acrylic acid ester (b1-3) units, and acrylic acid ester (b1-1) units, the vinyl chloride resin composition that is obtained tends to have excellent flexibility, cold resistance, low-temperature characteristics, and compatibility of the copolymer with the vinyl chloride resin. When the polymer block (b1) includes acrylic acid ester (b1-1) units, and acrylic acid ester (b1-2) units and/or acrylic acid ester (b1-3) units, the combination of the acrylic acid esters may be, for example, methyl acrylate/n-butyl acrylate, methyl acrylate/2-ethylhexyl acrylate, methyl acrylate/n-butyl acrylate/2-ethylhexyl acrylate, ethyl acrylate/n-butyl acrylate, ethyl acrylate/2-ethylhexyl acrylate, ethyl acrylate/n-butyl acrylate/2-ethylhexyl acrylate, n-propyl acrylate/n-hexyl acrylate, or isopropyl acrylate/n-butyl acrylate.

The mass ratio {(b1-2) + (b1-3)}/(b1-1) of the acrylic acid ester (b1-2) units and/or the acrylic acid ester (b1-3) units to the acrylic acid ester (b1-1) units in the polymer block (b1) is preferably 90/10 to 10/90, more preferably 86/14 to 15/85, and still more preferably 82/18 to 20/80 from points of view such as the flexibility and the resistance to whitening on bending of the vinyl chloride resin composition that is obtained. From points of view such as the flexibility and the transparency of the vinyl chloride resin composition that is obtained, the mass ratio {(b1-2) + (b1-3)}/(b1-1) is preferably 70/30 to 15/85, more preferably 65/35 to 22/78, and still more preferably 60/40 to 25/75. The respective contents of the acrylic acid ester units in the polymer block (b1) may be determined by a method such as ¹H-NMR measurement.

When the polymer block (b1) is composed of a plurality of kinds of acrylic acid esters, the polymer block (b1) may be a random copolymer, a block copolymer, a graft copolymer or a tapered block copolymer (a gradient copolymer) of acrylic acid esters. A random copolymer is usually desirable.

The proportion of acrylic acid ester units contained in the polymer block (b1) is preferably 60 mass% or more, more preferably 80 mass% or more, and still more preferably 90 mass% or more of the polymer block (b1). The polymer block (b1) may be composed of 100 mass% of acrylic acid ester units, that is, may consist solely of acrylic acid ester units.

Where necessary, the polymer block (b1) may contain additional monomer units other than the acrylic acid ester units as long as the advantageous effects of the present invention are not impaired. Examples of such additional monomers include methacrylic acid esters; vinyl monomers having a carboxyl group such as (meth)acrylic acid, crotonic acid, maleic acid, maleic anhydride and fumaric acid; vinyl monomers having a functional group such as (meth)acrylamide, (meth)acrylonitrile, vinyl acetate, vinyl chloride and vinylidene chloride; aromatic vinyl monomers such as styrene, α-methylstyrene, p-methylstyrene and m-methylstyrene; conjugated diene monomers such as butadiene and isoprene; olefin monomers such as ethylene, propylene, isobutene and octene; and lactone monomers such as ε-caprolactone and valerolactone. The monomer units derived from these additional monomers usually represent a small proportion of all the monomer units in the polymer block (b1). The proportion of the additional monomer units is preferably 40 mass% or less, more preferably 20 mass% or less, and still more preferably 10 mass% or less of the polymer block (b1).

The glass transition temperature of the polymer block (b1) is preferably -80 to 55°C, more preferably -70 to 50°C, still more preferably -60 to 45°C, and most preferably -50 to 25°C. When the glass transition temperature is in this range, the vinyl chloride resin composition of the present invention and shaped articles thereof tend to have excellent flexibility. The glass transition temperature in the present invention is the onset temperature obtained by extrapolating a DSC curve.

When the block copolymer (B) includes two or more polymer blocks (b1), the structures of the polymer blocks (b1) may be the same as or different from one another.

### (Polymer blocks (b2))

Examples of the methacrylic acid esters for forming constituent units in the polymer block (b2) include alkyl methacrylates such as methyl methacrylate, ethyl methacrylate, propyl methacrylate, n-butyl methacrylate, t-butyl methacrylate, n-hexyl methacrylate, cyclohexyl methacrylate, 2-ethylhexyl methacrylate, n-octyl methacrylate, lauryl methacrylate, tridecyl methacrylate, stearyl methacrylate and isobornyl methacrylate; methacrylic acid esters which have no functional groups and are not alkyl methacrylates, such as phenyl methacrylate and benzyl methacrylate; and methacrylic acid esters having a functional group such as methacrylic acid alkoxyalkyl esters including methoxyethyl methacrylate and ethoxyethyl methacrylate, diethylaminoethyl methacrylate, 2-hydroxyethyl methacrylate, 2-aminoethyl methacrylate, glycidyl methacrylate and tetrahydrofurfuryl methacrylate.

Among those described above, alkyl methacrylates are preferable, and methyl methacrylate, ethyl methacrylate and propyl methacrylate are more preferable. Methyl methacrylate is still more preferable for reasons such as economic availability and because the polymer block (b2) that is obtained attains excellent durability and weather resistance.

The methacrylic acid ester units in the polymer block (b2) may be derived from a single kind of a methacrylic acid ester, or may be obtained from two or more kinds of methacrylic acid esters. The proportion of methacrylic acid ester units contained in the polymer block (b2) is preferably 60 mass% or more, more preferably 80 mass% or more, and still more preferably 90 mass% or more of the polymer block (b2). The polymer block (b2) may be composed of 100 mass% of methacrylic acid ester units, that is, may consist solely of methacrylic acid ester units.

The polymer block (b2) may contain additional monomer units other than the methacrylic acid ester units as long as the advantageous effects of the present invention are not impaired. Examples of such additional monomers include acrylic acid esters; vinyl monomers having a carboxyl group such as (meth)acrylic acid, crotonic acid, maleic acid, maleic anhydride and fumaric acid; vinyl monomers having a functional group such as (meth)acrylamide, (meth)acrylonitrile, vinyl acetate, vinyl chloride and vinylidene chloride; aromatic vinyl monomers such as styrene, α-methylstyrene, p-methylstyrene and m-methylstyrene; conjugated diene monomers such as butadiene and isoprene; olefin monomers such as ethylene, propylene, isobutene and octene; and lactone monomers such as ε-caprolactone and valerolactone. The monomer units derived from these additional monomers usually represent a small proportion of all the monomer units in the polymer block (b2). The proportion of the additional monomer units is preferably 40 mass% or less, more preferably 20 mass% or less, and still more preferably 10 mass% or less of the polymer block (b2).

The glass transition temperature of the polymer block (b2) is preferably 50 to 150°C, more preferably 60 to 140°C, and still more preferably 70 to 130°C. When the glass transition temperature of the polymer block (b2) is in this range, the vinyl chloride resin composition of the present invention and shaped articles thereof tend to have excellent heat resistance (the ability to maintain mechanical properties at high temperatures).

The acrylic block copolymer (B) may include two or more polymer blocks (b2). In that case, the methacrylic acid ester units and the additional monomers constituting these polymer blocks (b2) may be the same as or different from one another.

The weight average molecular weight of the polymer block (b2) is not particularly limited, but is preferably in the range of 1,000 to 50,000, and more preferably in the range of 4,000 to 30,000. If the weight average molecular weight of the polymer block (b2) is less than 1,000, the acrylic block copolymer (B) that is obtained may have an insufficient cohesive force. If the weight average molecular weight of the polymer block (b2) is higher than 50,000, the acrylic block copolymer (B) that is obtained may have a high melt viscosity and may exhibit poor melt-kneadability with the vinyl chloride resin (A) to cause deterioration in productivity and processability. In the present specification, the weight average molecular weight (Mw) means the weight average molecular weight measured by a gel permeation chromatography (GPC) method relative to standard polystyrenes.

The difference in glass transition temperature between the polymer block (b1) and the polymer block (b2) in the acrylic block copolymer (B) is preferably 50°C or more, and more preferably 70°C or more.

The acrylic block copolymer (B) is preferably represented by any of the following general formulas in which "b1" denotes the polymer block (b1) and "b2" the polymer block (b2):

(b2-b1)n

(b2-b1)n-b2

(b2-b1)n-Z

(In the formulas, n is an integer of 1 to 30, and Z is a coupling site (a coupling site resulting from the formation of a chemical bond by the reaction of the polymer end with a coupling agent). The value of n is preferably 1 to 15, more preferably 1 to 8, and still more preferably 1 to 4.

Of the above structures, linear block copolymers represented by (b2-b1)n and (b2-b1)n-b2 are more preferable, and diblock copolymers represented by b2-b1, and triblock copolymers in which two of the polymer blocks (b2) are bonded to respective ends of the polymer block (b1), namely, triblock copolymers represented by b2-b1-b2 are still more preferable. Triblock copolymers represented by b2-b1-b2 are particularly preferable. These may be used singly, or two or more may be used in combination.

The content of the polymer block (b2) in the acrylic block copolymer (B) is 10 to 25 mass%. When the acrylic block copolymer (B) includes two or more polymer blocks (b2), the content of the polymer block (b2) is translated into the total content of the polymer blocks (b2).

If the content of the polymer block (b2) is less than 10 mass%, the fluidity of the acrylic block copolymer (B) is so increased that the copolymer tends to be liquid. If the content of the polymer block (b2) exceeds 25 mass%, the vinyl chloride resin composition that is obtained tends to be poor in flexibility.

The content of the polymer block (b2) in the acrylic block copolymer (B) is preferably 10.1 to 23 mass%, and more preferably 10.2 to 21 mass% from the point of view of the balance between the flexibility and the transparency of the vinyl chloride resin composition that is obtained.

From the point of view of the balance between the impact resistance and the transparency of the vinyl chloride resin composition of the present invention, the polystyrene-equivalent weight average molecular weight of the acrylic block copolymer (B) determined by gel permeation chromatography (GPC) measurement is 100,000 to 250,000, preferably 105,000 to 240,000, more preferably 110,000 to 230,000, and further preferably 112,500 to 220,000. If the weight average molecular weight of the acrylic block copolymer (B) is less than 100,000, the melt viscosity may be so lowered that the melt-kneadability with the vinyl chloride resin (A) tends to be deteriorated, with the result that shaped articles that are obtained tend to have poor mechanical strength. If, on the other hand, the weight average molecular weight of the acrylic block copolymer (B) is more than 250,000, the melt viscosity is so increased that productivity and processability may be deteriorated.

The molecular weight distribution (Mw/Mn) of the acrylic block copolymer (B) is preferably 1.0 to 1.4, and more preferably 1.0 to 1.3. When the molecular weight distribution is in the above range, the vinyl chloride resin composition of the present invention may be stably shaped by melt-forming. In the present specification, the number average molecular weight (Mn) and the weight average molecular weight (Mw) mean the number average molecular weight and the weight average molecular weight measured by a gel permeation chromatography (GPC) method relative to standard polystyrenes.

The method for producing the acrylic block copolymer (B) is not particularly limited. The acrylic block copolymer may be produced by any production method in accordance with a known process. In general, a block copolymer having a narrow molecular weight distribution is obtained by the living polymerization of monomers as structural units. Examples of such living polymerization processes include living polymerization using an organic rare earth metal complex as a polymerization initiator (see, for example, JP-A-H11-335432), living anionic polymerization using an organoalkali metal compound as a polymerization initiator in the presence of a mineral acid salt such as an alkali metal or alkaline earth metal salt (see, for example, JP-B-H07-25859), living anionic polymerization using an organoalkali metal compound as a polymerization initiator in the presence of an organoaluminum compound (see, for example, JP-A-H06-93060), and atom transfer radical polymerization (ATRP) (see, for example, Macromol. Chem. Phys., 2000, 201, pp. 1108-1114).

Among the above production processes, living anionic polymerization using an organoalkali metal compound as a polymerization initiator in the presence of an organoaluminum compound is advantageous in that the acrylic block copolymer (B) that is obtained has a narrow molecular weight distribution and has high purity, that is, the copolymer may be produced with reduced amounts of oligomer byproducts causing deterioration in migration resistance and fogging resistance of the vinyl chloride resin composition of the present invention, and high-molecular byproduct components causing a decrease in fluidity.

In an example method of living anionic polymerization in the presence of an organoaluminum compound, (meth)acrylic acid esters may be polymerized in the presence of an organolithium compound and an organoaluminum compound represented by the following general formula (4):

AlR⁴R⁵R⁶ (4)

(In the formula (4), R⁴, R⁵ and R⁶ are each independently an optionally substituted alkyl group, an optionally substituted cycloalkyl group, an optionally substituted aryl group, an optionally substituted aralkyl group, an optionally substituted alkoxy group, an optionally substituted aryloxy group or an N,N-disubstituted amino group, or R⁴ represents any of the above groups and R⁵ and R⁶ together form an optionally substituted arylenedioxy group.) Where necessary, the polymerization further involves an ether compound such as dimethyl ether, dimethoxyethane, diethoxyethane or 12-crown-4; and/or a nitrogen-containing compound such as triethylamine, N,N,N',N'-tetramethylethylenediamine, N,N,N',N",N"-pentamethyldiethylenetriamine, 1,1,4,7,10,10-hexamethyltriethylenetetramine, pyridine or 2,2'-dipyridyl, in the reaction system.

Examples of the organolithium compounds include alkyllithiums and alkyldilithiums such as n-butyllithium, sec-butyllithium and tetramethylenedilithium; aryllithiums and aryldilithiums such as phenyllithium and xylyllithium; aralkyllithiums and aralkyldilithiums such as benzyllithium and dilithium formed by the reaction of diisopropenylbenzene and butyllithium; lithium amides such as lithium diisopropylamide; and lithium alkoxides such as methoxylithium.

From points of view such as high living properties during polymerization and easy handling, some preferred organoaluminum compounds represented by the general formula (4) are isobutylbis(2,6-di-tert-butyl-4-methylphenoxy)aluminum, isobutylbis(2,6-di-tert-butylphenoxy)aluminum and isobutyl[2,2'-methylenebis(4-methyl-6-tert-butylphenoxy)]aluminum.

### <Gelation accelerators (C)>

The vinyl chloride resin composition of the present invention includes a gelation accelerator (C) as a constituent. In the present invention, the gelation accelerator is an agent that promotes the gelation (melting) of the vinyl chloride resin powder and is usually recognized as a gelation promoter for vinyl chloride resins. In the production of the vinyl chloride resin composition of the present invention, this component facilitates melt-kneading of the vinyl chloride resin (A) and the acrylic block copolymer (B), and promotes the uniformity of these components in the vinyl chloride resin composition.

From the points of view of the compatibility with the vinyl chloride resin (A) and the acrylic block copolymer (B), and processability, the gelation accelerator (C) is preferably a gelation accelerator (C1) comprising a (meth)acrylic acid acrylic polymer.

Examples of the gelation accelerators (C1) comprising a (meth)acrylic acid acrylic polymer include multistage copolymers including a methyl methacrylate polymer (c1) and a copolymer (c2) of a major proportion of at least one monomer selected from the group consisting of acrylic acid esters and methacrylic acid esters except methyl methacrylate, and a minor proportion of methyl methacrylate;
polymer mixtures obtained by mixing the methyl methacrylate polymer (c1) and the copolymer (c2) in a latex state;
multistage copolymers including a copolymer (c3) of a major proportion of methyl methacrylate, and a minor proportion of at least one monomer selected from the group consisting of acrylic acid esters and methacrylic acid esters except methyl methacrylate, and a copolymer (c4) of a minor proportion of methyl methacrylate, and a major proportion of a monomer selected from the group consisting of acrylic acid esters and methacrylic acid esters except methyl methacrylate; and
polymer mixtures obtained by mixing the copolymer (c3) and the copolymer (c4) in a latex state.

The gelation accelerator (C) that is used may be a commercially available gelling agent for vinyl chloride resins. Examples of such gelation accelerators (C) comprising a methacrylic acid acrylic polymer include METABLEN (registered trademark) P series (manufactured by Mitsubishi Chemical Corporation) such as METABLEN P-531A, METABLEN P-530A, METABLEN P-551A, METABLEN P-550A, METABLEN P-501A and METABLEN P-570A; KANE ACE (registered trademark) PA series (manufactured by Kaneka Corporation) such as KANE ACE PA-20, KANE ACE PA-40, KANE ACE PA-60 and KANE ACE PA101-1; and PARALOID (registered trademark) K series (manufactured by Dow Chemical Japan Limited) such as PARALOID K-125 and PARALOID K-175.

### <Vinyl chloride resin compositions>

The vinyl chloride resin composition of the present invention includes the vinyl chloride resin (A), the acrylic block copolymer (B) and the gelation accelerator (C).

The proportion of the vinyl chloride resin (A) contained in the vinyl chloride resin composition of the present invention is preferably 40 mass% or more, more preferably 45 mass% or more, and still more preferably 50 mass% or more, and is preferably 80 mass% or less, more preferably 70 mass% or less, and still more preferably 60 mass% or less.

In the vinyl chloride resin composition of the present invention, the content of the acrylic block copolymer (B) is 20 to 150 parts by mass with respect to 100 parts by mass of the vinyl chloride resin (A). From the points of view of flexibility and kneadability, the content is preferably 20 to 140 parts by mass, more preferably 30 to 130 parts by mass, and still more preferably 40 to 120 parts by mass with respect to 100 parts by mass of the vinyl chloride resin (A). If the content of the acrylic block copolymer (B) is below the above range, flexibility tends to be insufficient. If the content exceeds the above range, kneadability and processability tend to be lowered.

In the vinyl chloride resin composition of the present invention, the content of the gelation accelerator (C) is 4 to 18 parts by mass with respect to 100 parts by mass of the vinyl chloride resin (A). From the points of view of flexibility and kneadability, the content is preferably 5 to 15 parts by mass, and more preferably 7 to 12 parts by mass with respect to 100 parts by mass of the vinyl chloride resin (A). If the content of the gelation accelerator (C) is below the above range, kneadability may be insufficient. If the content exceeds the above range, flexibility may be lowered, or the composition may come to undergo an excessively high shear force and the vinyl chloride resin (A) may be decomposed by the heat that is generated.

Where necessary, the vinyl chloride resin composition of the present invention may contain a plasticizer, a lubricant, a flame retardant, a filler and a processing aid as long as the advantageous effects of the present invention are not impaired. Further, various kinds of additives generally used for vinyl chloride resins such as, for example, stabilizers, nonionic surfactants, UV absorbers, antioxidants, light stabilizers and fillers may be added.

Examples of the plasticizers include ester plasticizers and polyester plasticizers. In particular, high-molecular ester plasticizers are preferable. Specific examples of the plasticizers include DINP (diisononyl phthalate), DHP (diheptyl phthalate), DOP (di-2-ethylhexyl phthalate), n-DOP (di-n-octyl phthalate), DIDP (diisodecyl phthalate), BBP (benzylbutyl phthalate), DOTP (di-2-ethylhexyl terephthalate), TOTM (tri-2-ethylhexyl trimellitate), DOA (di-2-ethylhexyl adipate), TCP (tricresyl phosphate), BOA (benzyloctyl adipate), DPCP (diphenyl cresyl phosphate), diisodecyl adipate, and mixtures thereof.

Examples of the lubricants include C₁₂-C₃₀ hydrogen carbonate lubricants, fatty acid (wax) lubricants, ester (wax) lubricants, fatty acid ester lubricants, C₁₂-C₃₀ fatty acid metal soap lubricants and C₁₂-C₃₀ aliphatic alcohol (wax) lubricants. Specific examples of such lubricants include zinc stearate, barium stearate, calcium stearate, cadmium stearate, calcium oleate and calcium laurate. Examples of the flame retardants include antimony trioxide. Examples of the fillers include inorganic fillers such as calcium carbonate, titanium oxide, talc, natural mica, synthetic mica, wollastonite, montmorillonite and silica. These lubricants, flame retardants or fillers may be used singly, or two or more may be used in combination.

The stabilizers may be usual stabilizers such as metal soaps, epoxy compounds and organic phosphite stabilizers. Examples of the metal soaps include zinc stearate, barium stearate, calcium stearate, cadmium stearate, barium ricinoleate, calcium oleate, calcium laurate and zinc octoate, and also include composite stabilizers such as barium-zinc types, calcium-zinc types and barium-cadmium types. Examples of the epoxy compounds include epoxidized soybean oil, epoxidized linseed oil, epoxidized polybutadiene, methyl epoxystearate, epoxidized stearic acid, ethylhexyl epoxystearate, stearyl epoxystearate, tris(epoxypropyl) isocyanurate, 3-(2-xenoxy)-1,2-epoxypropane, epoxy bisphenol A diglycidyl ether, vinyldicyclohexene diepoxide, and polycondensate of 2,2-bis(4-hydroxyphenyl)propane and epichlorohydrin. Examples of the organic phosphite stabilizers include diphenyl decyl phosphite, triphenyl phosphite, tris(nonylphenyl) phosphite, tristearyl phosphite and octyl diphenyl phosphite. Other stabilizers, for example, tin stabilizers may also be used such as dibutyltin dilaurate, dibutyltin maleate, organotin mercaptide and organotin sulfonamide. Among those described above, dibutyltin maleate, organotin mercaptide, composite stabilizers such as barium-zinc types, calcium-zinc types and barium-cadmium types, and epoxy compounds are preferable. The stabilizers may be used singly, or two or more may be used in combination. The amount in which the stabilizer is added is preferably 0.1 to 10 parts by mass, more preferably 0.5 to 7 parts by mass, and still more preferably 0.8 to 5 parts by mass with respect to 100 parts by mass of the vinyl chloride resin (A).

Examples of the nonionic surfactants include esters of a polyhydric alcohol and a fatty acid, and esters of a polyhydric alcohol, a fatty acid and a dibasic acid, such as sorbitan fatty acid esters, sorbitol fatty acid esters, glycerin fatty acid esters, diglycerin fatty acid esters, diglycerin fatty acid/dibasic acid esters, and glycerin fatty acid/dibasic acid esters, and also include adducts of the above esters with an alkylene oxide such as ethylene oxide, propylene oxide or butylene oxide. Specific examples of the nonionic surfactants include sorbitan palmitate, sorbitan stearate, adduct of sorbitan stearate with 2 mol of ethylene oxide, adduct of sorbitan stearate with 3 mol of propylene oxide, sorbitol stearate, adduct of sorbitol stearate with 3 mol of propylene oxide, diglycerin palmitate, diglycerin stearate, glycerin stearate, adduct of glycerin palmitate with 2 mol of ethylene oxide, adduct of sorbitan stearate adipate with 3 mol of ethylene oxide, adduct of sorbitol stearate adipate with 2 mol of ethylene oxide, adduct of diglycerin palmitate sebacate with 3 mol of propylene oxide, and adduct of sorbitol palmitate adipate with 3 mol of ethylene oxide. The nonionic surfactants may be used singly, or two or more may be used in combination.

Examples of the UV absorbers include hydroquinone UV absorbers such as hydroquinone disalicylate; salicylic acid UV absorbers such as phenyl salicylate and para-octylphenyl salicylate; benzophenone UV absorbers such as 2,2'-hydroxy-4-methoxybenzophenone and 2,2'-hydroxy 4,4'-dimethoxybenzophenone; benzotriazole UV absorbers such as 2-(2'-hydroxy-5'-methylphenyl)benzotriazole and 2-(2'-hydroxy-5'-methylphenyl)-5,6-dichlorobenzotriazole; and cyanoacrylate UV absorbers. The UV absorbers may be used singly, or two or more may be used in combination.

Examples of the antioxidants include phenol antioxidants, thiodipropionic acid ester antioxidants and aliphatic sulfite antioxidants. The antioxidants may be used singly, or two or more may be used in combination.

Examples of the light stabilizers include hindered amines such as 4-(phenylacetoxy)-2,2,6,6-tetramethylpiperidine and tris-(2,2,6,6-tetramethyl-4-piperidyl)triazine-2,4,6-tricarboxylate. The light stabilizers may be used singly, or two or more may be used in combination.

In the present invention, a tackifier resin may be added for the purpose of imparting tackiness to the vinyl chloride resin composition. The tackifier resin is preferably one having a softening point of 20 to 120°C, and more preferably one having a softening point of 80 to 110°C. If the softening point is excessively low, high adhesive strength cannot be obtained. If the softening point is excessively high, the annealing temperature is necessarily limited to a high temperature to obtain high adhesive strength. Specific examples of the tackifier resins which may be used include rosin resins, terpene resins, aliphatic petroleum resins, aromatic petroleum resins, alicyclic petroleum resins, coumarone resins, styrene resins, alkylphenol resins and xylene resins. In particular, terpene resins and aliphatic petroleum resins are preferable, with preferred examples including YS resins (manufactured by YASUHARA CHEMICAL CO., LTD.) and Escorez resins (manufactured by Exxon Mobil Corporation) which are terpene resins. The tackifier resins may be used singly, or two or more may be used in combination.

The amount in which the tackifier resin is added is preferably 20 parts by mass or less with respect to 100 parts by mass of the vinyl chloride resin. If the amount exceeds 20 parts by mass, the adhesive strength is so increased that the peeling adhesive strength is also increased and, when a shaped article formed of the vinyl chloride resin composition of the present invention comes into contact with a material, the tackifier resin tends to be visibly transferred to the material.

The vinyl chloride resin composition of the present invention may be produced by any method without limitation, for example, by dissolving the components into a solvent and casting the solution followed by drying, or by melt-kneading the components. Melt-kneading is preferable to ensure that the components for forming the vinyl chloride resin composition will be highly dispersed. For example, the vinyl chloride resin (A), the acrylic block copolymer (B) and the gelation accelerator (C) optionally together with the additives described above may be melt-kneaded at the same time; or the vinyl chloride resin (A) and the gelation accelerator (C) together with the additives described above may be mixed with one another, and the mixture may be melt-kneaded together with the acrylic block copolymer (B).

For example, the melt-kneading operation may be performed using a known mixing or kneading device such as a kneader ruder, a single-screw extruder, a twin-screw extruder, a mixing roll or a Banbury mixer. In particular, it is preferable to use a twin-screw extruder to enhance the kneadability and compatibility between the vinyl chloride resin (A) and the acrylic block copolymer (B). The temperature during melt-kneading may be controlled appropriately in accordance with factors such as the melting temperatures of components such as the vinyl chloride resin (A) and the acrylic block copolymer (B) that are used, and is usually in the range of 110 to 220°C. In the manner described above, the vinyl chloride resin composition of the present invention may be obtained in a desired form such as pellets or a powder. The resin composition in such a form as pellets or a powder is suitable for use as a shaping material.

The vinyl chloride resin composition obtained in the present invention has excellent melt-shaping properties and may be shaped by a shaping method and with a shaping device generally used for thermoplastic resins. For example, the composition may be shaped by a method such as injection molding, extrusion, compression molding, blow molding, calendering or vacuum forming into a shaped article such as a molded article, a pipe, a plate, a sheet, a film or a fibrous product. The shaped article may be a laminate including a layer formed of the vinyl chloride resin composition.

The vinyl chloride resin composition of the present invention, and shaped articles formed of the vinyl chloride resin composition are excellent in kneading properties, resistance to whitening on bending, flexibility, fogging resistance, thermal aging resistance, migration resistance, low-temperature characteristics, electrical characteristics and printability, and realize small migration of plasticizer to adherends, minor fogging, and stable properties over a long period of time. Thus, the vinyl chloride resin composition and the shaped articles may be used as products such as pipes, plates, sheets, films and containers, and also may be used as indoor and outdoor structural members, civil engineering materials such as impermeable sheets and waterproofing materials, building materials such as doors, windows, wall covering materials, rain gutters, flooring materials, window frames and decks, electric wire covering materials, agricultural materials such as horticultural greenhouses and agricultural films, industrial materials such as exhaust ducts, piping members such as oxygen concentrators, medical equipment such as protective covers, tubes and cannulas, automobile interior/exterior materials such as console lids, door trims, instrument panel pads, floor mats and insulating tapes, residential interior members such as wallpapers, decorative films, floor sheets, cushion floors, tile carpets, floor tiles and table cloths, household appliance parts such as gaskets, grips and housings, food packaging materials such as bottles, and daily miscellaneous goods such as shoes, clothing, bags, cushion materials, stationery, toys, tubes, hoses and shading materials. Further, the shaped articles that are obtained may be used after surface treatments such as printing, painting, plating, vapor deposition and sputtering depending on the purpose of use.

### EXAMPLES

Hereinbelow, the present invention will be described in detail with reference to Examples and other experiments. However, it should be construed that the scope of the present invention is not limited to such Examples. In Production Examples described later, monomers and other compounds were dried and purified by conventional methods and were used after being degassed with nitrogen. Further, such monomers and compounds were transferred and supplied to the reaction system, in a nitrogen atmosphere. Properties in Examples and Comparative Examples were measured or evaluated by the following methods.

In the following examples, the weight average molecular weight (Mw) and the number average molecular weight (Mn) of acrylic block copolymers were measured by GPC relative to polystyrenes, and the molecular weight distribution (Mw/Mn) was calculated from the values of these molecular weights. The measurement device and conditions used in GPC are as follows.

### [Device and conditions for GPC measurement]

·Device: GPC device "HLC-8020" manufactured by Tosoh Corporation
·Separation columns: "TSKgel GMHXL", "G4000HXL" and "G5000HXL" manufactured by Tosoh Corporation were connected in series.
·Eluent: Tetrahydrofuran
·Eluent flow rate: 1.0 ml/min
·Column temperature: 40°C
·Detection method: Differential refractometer (RI)

Further, in the following examples, the contents of polymer blocks in acrylic block copolymers were determined by ¹H-NMR measurement. The measurement device and conditions used in the ¹H-NMR measurement are as follows.

### [Device and conditions for ¹H-NMR measurement]

·Device: Nuclear magnetic resonance device "JNM-ECX400" manufactured by JEOL Ltd.
·Deuterated solvent: Deuterated chloroform

In a ¹H-NMR spectrum, signals near 3.6 ppm and 3.7 ppm were assigned to the ester groups (-O-CH₃) in methyl methacrylate units and the ester groups (-O-CH₃) in methyl acrylate units, respectively. A signal near 4.0 ppm was assigned to the ester groups (-O-CH₂-CH₂-CH₂-CH₃) in n-butyl acrylate units or to the ester groups (-O-CH₂-CH(-CH₂-CH₃)-CH₂-CH₂-CH₂-CH₃) in 2-ethylhexyl acrylate units. The molar ratio of the monomer units was calculated from the ratio of the integrals of these peaks and was converted to a mass ratio based on the molecular weights of the monomer units, thereby determining the contents of the respective polymer blocks.

### [Kneadability]

Using the melt-kneading device described below, components described in Table 2 were melt-kneaded under the following conditions to give a vinyl chloride resin composition as a melt-kneaded product. The melt-kneaded product obtained was pressed under the following conditions using the press machine described below to form a 2 mm thick pressed sheet. The appearance of the sheet obtained was checked to evaluate the kneadability. The kneadability was evaluated as AA when there were no unkneaded materials or decomposed resins, and as CC when unkneaded materials or decomposed resins were found.
·Melt-kneading device: Two-roll mill manufactured by DAIHAN CO., LTD., mixing roll "DY6-15", roll diameter: 6 inches
·Kneading conditions:
   Roll rotational speed: Front/24 rpm, back/21 rpm
   Clearance: 500 µm
   Kneading temperature: 160°C
   Kneading time: 5 Minutes
·Press machine: 26-Ton hydraulic press machine manufactured by Toho Press Kogyo-sho
·Pressing conditions: Preheating at 180°C for 2 minutes, pressurization at 180°C and 5 MPa for 2 minutes, and cooling at 5 MPa for 5 minutes.

### [Resistance to whitening on bending]

The 2 mm thick pressed sheet prepared for the evaluation of kneadability was bent and deformed by hand to evaluate the resistance to whitening on bending. The resistance was rated as AA when the sheet was not whitened by flexural deformation, and as CC when the sheet was whitened.

### [Flexibility]

Three of the 2 mm thick pressed sheets prepared for the evaluation of kneadability were stacked on top of one another, and the durometer type A hardness was measured in accordance with JIS K6253-3: 2012 to evaluate the flexibility. The value of hardness was read 15 seconds after the start of the measurement. The lower the value of hardness, the higher the flexibility.

### [Fogging tendency]

A circular test piece having a diameter of 80 mmØ was punched out from the 2 mm thick pressed sheet prepared for the evaluation of kneadability. The test piece obtained was placed into the beaker in the fogging tendency testing device described below. A transparent glass plate was placed onto the beaker, and the beaker was sealed by placing on top of the glass plate a cooling plate that had been cooled to 21°C. The beaker was then heated at 100°C for 8 hours. The haze of the transparent glass plate placed on top of the beaker was measured with the haze meter described below to evaluate the fogging tendency. The smaller the value of haze, the smaller the degree of fogging and the lower the fogging tendency (the higher the fogging resistance).
·Fogging tendency testing device: Window screen fogging tester WF-2 manufactured by Suga Test Instruments Co., Ltd.
·Haze meter: Touch panel-type haze computer HZ-2 manufactured by Suga Test Instruments Co., Ltd.

### [Thermal aging resistance]

A dumbbell-shaped No. 1 (JIS K6251: 2017) test piece was punched out from the 2 mm thick pressed sheet prepared for the evaluation of kneadability. The weight of the test piece before heating was measured. Thereafter, the test piece was heated in a hot air dryer at 136°C for 168 hours, and the weight after heating was measured. The rate (%) of weight change before and after the heating ((weight after heating - weight before heating)/weight before heating × 100) was determined to evaluate the thermal aging resistance. The smaller the rate of weight change, the higher the thermal aging resistance.

### [Migration tendency]

Two test pieces having a length of 100 mm and a width of 100 mm were cut from the 2 mm thick pressed sheet prepared for the evaluation of kneadability. A PMMA sheet having a length of 100 mm, a width of 100 mm and a thickness of 0.2 mm was sandwiched between the two test pieces. The unit was placed into an oven and was heated at 70°C for 72 hours. The weight of the PMMA sheet before and after the heating was measured, and the rate (%) of weight change ((weight after heating - weight before heating)/weight before heating × 100) was determined to evaluate the migration tendency. The smaller the rate of weight change, the lower the migration tendency (the higher the migration resistance).

### [Low-temperature characteristics]

Test pieces having a length of 38 mm and a width of 6 mm were punched out from the 2 mm thick pressed sheet prepared for the evaluation of kneadability. The test pieces were subjected to an impact to measure the brittleness temperature at which 50% of the test pieces exhibited brittle failure, thereby evaluating low-temperature characteristics. The lower the 50% impact brittleness temperature, the higher the low-temperature characteristics.

### [Electrical characteristics]

The melt-kneaded product prepared for the evaluation of kneadability was pressed using the same press machine under the same pressing conditions as in the evaluation of kneadability to form a 1 mm thick pressed sheet. The 1 mm thick pressed sheet was cut to give a test piece having a length of 100 mm and a width of 100 mm. The test piece obtained was tested in accordance with JIS K6911: 2006 to measure the volume resistivity, based on which electrical characteristics were evaluated.

The higher the volume resistivity, the higher the insulating properties and the higher the electrical characteristics.
·Device: High resistance meter 4329A manufactured by YOKOGAWA HEWLETT PACKARD, LTD.
Conditions: Applied voltage 500 V D.C., 60 seconds, measurement temperature 23°C

### [Printability]

The melt-kneaded product prepared for the evaluation of kneadability was added into a calender that had been heated to 160 to 190°C and was rolled into a sheet having a thickness of 0.2 mm. Printing was performed on one side of the sheet, and the print was dried at room temperature. Thereafter, copy paper was placed onto the printed surface of the sheet. The unit was sandwiched between glass plates and was allowed to stand at 50°C for 168 hours. After being allowed to stand, the ink transfer to the copy paper was checked based on the following criteria to evaluate the printability.
AA: No ink was transferred.
CC: Ink was transferred.

### <<Production Example 1>> [Production of acrylic block copolymer (B-1)]

(1) A three-necked flask was equipped with a three-way cock and the inside was purged with nitrogen. While performing stirring at room temperature, 958 g of toluene and 34.5 g of 1,2-dimethoxyethane were added, and subsequently 18.0 g of a toluene solution containing 9.06 mmol of isobutylbis(2,6-di-t-butyl-4-methylphenoxy)aluminum was added. Further, 2.53 g of a sec-butyllithium in cyclohexane solution containing 4.31 mmol of sec-butyllithium was added.
(2) Subsequently, 28.8 g of methyl methacrylate was added to the mixture at room temperature while performing stirring, and stirring was continued for another 60 minutes. The reaction liquid was yellow at first and became colorless after the 60 minutes of stirring.
(3) Thereafter, the internal temperature of the polymerization liquid was lowered to -30°C, and 353 g of n-butyl acrylate was added dropwise over a period of 2 hours while performing stirring. After the completion of the dropwise addition, the mixture was further stirred at -30°C for 5 minutes.
(4) Thereafter, 38.2 g of methyl methacrylate was added to the mixture, and the resultant mixture was stirred at room temperature overnight.
(5) The polymerization reaction was terminated by the addition of 10.0 g of methanol. The reaction liquid obtained was poured into 15 kg of methanol while performing stirring to precipitate a white deposit. The white deposit obtained was recovered and was dried to give 380 g of an acrylic block copolymer (B-1). The weight average molecular weight and the molecular weight distribution (Mw/Mn) of the acrylic block copolymer (B-1) obtained were determined by the GPC measurement described hereinabove. Further, the total content of PMMA (the polymer blocks composed of 100 mass% of methyl methacrylate units) in the acrylic block copolymer (B-1) was determined by the ¹H-NMR measurement described hereinabove.

### <<Production Examples 2 to 7>>

Acrylic block copolymers (B-2) to (B-7) were produced in the same manner as in Production Example 1, except that the amounts of the monomers added in the steps (1) and (3), and the type and the amount of the monomer added in the step (2) were changed as described in Table 1.

**[Table 1]**

| | | Production Examples | | | |
|---|---|---|---|---|---|
| | | 1 | 2 | 3 | 4 |
| Acrylic block copolymer | | B-1 | B-2 | B-3 | B-4 |
| Monomers added (g) | | | | | |
| Step (1) | MMA | 28.8 | 22.4 | 29.6 | 69.3 |
| Step (2) | nBA | 353 | 393 | 339 | 315 |
| | 2EHA | 0 | 0 | 0 | 0 |
| Step (3) | MMA | 38.2 | 24.7 | 70.7 | 65.9 |
| Mw of acrylic block copolymer | | 140000 | 200000 | 223000 | 61000 |
| Mw/Mn of acrylic block copolymer | | 1.22 | 1.25 | 1. 28 | 1.17 |
| Total content (mass%) of polymer blocks (b2) | | 16 | 11 | 23 | 30 |

### (Continued)

| | | Production Examples | | |
|---|---|---|---|---|
| | | 5 | 6 | 7 |
| Acrylic block copolymer | | B-5 | B-6 | B-7 |
| Monomers added (g) | | | | |
| Step (1) | MMA | 53.9 | 65.0 | 35.2 |
| Step (2) | nBA | 360 | 226 | 171 |
| | 2EHA | 0 | 0 | 171 |
| Step (3) | MMA | 53.9 | 161 | 54.1 |
| Mw of acrylic block copolymer | | 72000 | 63000 | 113000 |
| Mw/Mn of acrylic block copolymer | | 1.18 | 1.13 | 1.23 |
| Total content (mass%) of polymer blocks (b2) | | 23 | 50 | 21 |

| | | | | |
|---|---|---|---|---|
| MMA: Methyl methacrylate nBA: n-Butyl acrylate 2EHA: 2-Ethylhexyl acrylate | | | | |

Further, the following components were used in vinyl chloride resin compositions of Examples and Comparative Examples.
·Vinyl chloride resin (A): "TK-1000" (average polymerization degree: 1000) manufactured by Shin-Etsu Chemical Co., Ltd.
·Gelation accelerator (C-1): "METABLEN P550A" manufactured by Mitsubishi Chemical Corporation
·Gelation accelerator (C-2): "METABLEN P530A" manufactured by Mitsubishi Chemical Corporation
·Plasticizer: "DINP" manufactured by Tokyo Chemical Industry Co., Ltd.
·Plasticizer: "ADK CIZER PN1030" (polyester plasticizer) manufactured by ADEKA CORPORATION
·Stabilizer: "EMBILIZER OT-4" manufactured by Tokyo Fine Chemical CO., LTD.
·Stabilizer: "EMBILIZER OP-3" manufactured by Tokyo Fine Chemical CO., LTD.
·Lubricant: Calcium stearate manufactured by KANTO CHEMICAL CO., INC.

### <<Example 1>>

As described in Table 2, 100 parts by mass of the vinyl chloride resin was mixed together with 80 parts by mass of the acrylic block copolymer (B-1) described in Table 1, 5 parts by mass of the gelation accelerator, 1 part by mass of each of the stabilizers, and 0.5 parts by mass of the lubricant by stirring with a Henschel mixer for 5 minutes to give an ingredient mixture. Subsequently, the ingredient mixture was kneaded with a two-roll mill heated to 160°C for 5 minutes under the conditions described in the section of kneadability to form a vinyl chloride resin composition. The vinyl chloride resin composition obtained was pressed under the conditions described in the section of kneadability to form 2 mm thick pressed sheets and 1 mm thick pressed sheets. The pressed sheets obtained were tested by the evaluation methods described hereinabove to evaluate the kneadability, the resistance to whitening on bending, the flexibility, the fogging tendency, the thermal aging resistance, the migration tendency, the low-temperature characteristics, the electrical characteristics and the printability. The results are described in Table 2.

### <<Examples 2 to 9>>

Vinyl chloride resin compositions and pressed sheets were prepared and tested to measure properties in the same manner as in Example 1, except that the types and the amounts of the acrylic block copolymer (B) and the gelation accelerator (C) were changed as described in Table 2. The results are described in Table 2.

### <<Comparative Example 1>>

A vinyl chloride resin composition and pressed sheets were prepared and tested to measure properties in the same manner as in Example 1, except that the gelation accelerator (C) was not added. The results are described in Table 2.

### <<Comparative Examples 2 to 5>>

Vinyl chloride resin compositions and pressed sheets were prepared and tested to measure properties in the same manner as in Example 1, except that the type and the amount of the gelation accelerator (C) were changed as described in Table 2. The results are described in Table 2.

### <<Comparative Examples 6 and 7>>

Vinyl chloride resin compositions and pressed sheets were prepared and tested to measure properties in the same manner as in Comparative Example 1, except that the amount in which the acrylic block copolymer (B) was added was changed as described in Table 2. The results are described in Table 2.

### <<Comparative Examples 8 to 10>>

Vinyl chloride resin compositions and pressed sheets were prepared and tested to measure properties in the same manner as in Comparative Example 1, except that the types and the amounts of the acrylic block copolymer (B) and the plasticizer were changed as described in Table 2. The results are described in Table 2.

### <<Comparative Examples 11 to 13>>

Vinyl chloride resin compositions and pressed sheets were prepared and tested to measure properties in the same manner as in Example 2, except that the type of the acrylic block copolymer (B) was changed as described in Table 2. The results are described in Table 2.

**[Table 2]**

| | | Examples | | | | |
|---|---|---|---|---|---|---|
| | | 1 | 2 | 3 | 4 | 5 |
| Vinyl chloride resin (A) | | 100 | 100 | 100 | 100 | 100 |
| Acrylic block copolymers (B) | B-1 | 80 | 80 | 80 | 60 | 120 |
| | B-2 | | | | | |
| | B-3 | | | | | |
| | B-4 | | | | | |
| | B-5 | | | | | |
| | B-6 | | | | | |
| | B-7 | | | | | |
| Gelation accelerators (C) | C-1 | 5 | 10 | 15 | 10 | 10 |
| | C-2 | | | | | |
| Plasticizers | DINP | | | | | |
| | PN1030 | | | | | |
| Stabilizers | EMBILIZER OT-4 | 1 | 1 | 1 | 1 | 1 |
| | EMBILIZER OP-3 | 1 | 1 | 1 | 1 | 1 |
| Lubricant | Calcium stearate | 0.5 | 0.5 | 0.5 | 0.5 | 0.5 |
| Kneadability | --- | AA | AA | AA | AA | AA |
| Resistance to whitening on bending | --- | AA | AA | AA | AA | AA |
| Flexibility | Value of type A hardness after 15 seconds [-] | 66 | 68 | 72 | 73 | 58 |
| Fogging tendency | Glass haze [%] | 8.0 | 8.5 | 8.6 | 7.5 | 8.8 |
| Thermal aging resistance | Rate [%] of weight change | -1.5% | -1.9% | -2.1% | -2.2% | -1.9% |
| Migration tendency | Rate [%] of weight change of PMMA | <0.5% | <0.5% | <0.5% | <0.5% | <0.5% |
| Low-temperature characteristics | 50% Impact brittleness temperature [°C] | -18 | -22 | -23 | -17 | -25 |
| Electrical characteristics | Volume resistivity [×10¹¹ Ω·cm] | 3.2 | 3.0 | 2.9 | 2.9 | 3.0 |
| Printability | --- | AA | AA | AA | AA | AA |

### (Continued)

| | | Examples | | | |
|---|---|---|---|---|---|
| | | 6 | 7 | 8 | 9 |
| Vinyl chloride resin (A) | | 100 | 100 | 100 | 100 |
| Acrylic block copolymers (B) | B-1 | 80 | | | |
| | B-2 | | 80 | | |
| | B-3 | | | 80 | |
| | B-4 | | | | |
| | B-5 | | | | |
| | B-6 | | | | |
| | B-7 | | | | 80 |
| Gelation accelerators (C) | C-1 | | 10 | 10 | 10 |
| | C-2 | 10 | | | |
| Plasticizers | DINP | | | | |
| | PN1030 | | | | |
| Stabilizers | EMBILIZER OT-4 | 1 | 1 | 1 | 1 |
| | EMBILIZER OP-3 | 1 | 1 | 1 | 1 |
| Lubricant | Calcium stearate | 0.5 | 0.5 | 0.5 | 0.5 |
| Kneadability | --- | AA | AA | AA | AA |
| Resistance to whitening on bending | --- | AA | AA | AA | AA |
| Flexibility | Value of type A hardness after 15 seconds [-] | 70 | 62 | 73 | 60 |
| Fogging tendency | Glass haze [%] | 8.2 | 8.0 | 7.7 | 9.0 |
| Thermal aging resistance | Rate [%] of weight change | -1.7% | -1.7% | -1.9% | -2.0% |
| Migration tendency | Rate [%] of weight change of PMMA | <0.5% | <0.5% | <0.5% | <0.5% |
| Low-temperature characteristics | 50% Impact brittleness temperature [°C] | -21 | -26 | -17 | -28 |
| Electrical characteristics | Volume resistivity [×10¹¹ Ω·cm] | 2.7 | 3.3 | 3.5 | 2.9 |
| Printability | --- | AA | AA | AA | AA |

### (Continued)

| | | Comparative Examples | | | |
|---|---|---|---|---|---|
| | | 1 | 2 | 3 | 4 |
| Vinyl chloride resin (A) | | 100 | 100 | 100 | 100 |
| Acrylic block copolymers (B) | B-1 | 80 | 80 | 80 | 80 |
| | B-2 | | | | |
| | B-3 | | | | |
| | B-4 | | | | |
| | B-5 | | | | |
| | B-6 | | | | |
| | B-7 | | | | |
| Gelation accelerators (C) | C-1 | 0 | 3 | 20 | |
| | C-2 | | | | 3 |
| Plasticizers | DINP | | | | |
| | PN1030 | | | | |
| Stabilizers | EMBILIZER OT-4 | 1 | 1 | 1 | 1 |
| | EMBILIZER OP-3 | 1 | 1 | 1 | 1 |
| Lubricant | Calcium stearate | 0.5 | 0.5 | 0.5 | 0.5 |
| Kneadability | --- | CC | CC | CC | CC |
| Resistance to whitening on bending | --- | CC | CC | AA | CC |
| Flexibility | Value of type A hardness after 15 seconds [-] | 65 | 64 | 78 | 67 |
| Fogging tendency | Glass haze [%] | 7.8 | 8.0 | 8.7 | 7.6 |
| Thermal aging resistance | Rate [%] of weight change | -1.5% | -1.8% | -2.1% | -1.6% |
| Migration tendency | Rate [%] of weight change of PMMA | <0.5% | <0.5% | <0.5% | <0.5% |
| Low-temperature characteristics | 50% Impact brittleness temperature [°C] | 2 | -9 | -16 | -12 |
| Electrical characteristics | Volume resistivity [×10¹¹ Ω·cm] | 4.0 | 3.3 | 2.6 | 3.5 |
| Printability | --- | AA | AA | AA | AA |

### (Continued)

| | | Comparative Examples | | | |
|---|---|---|---|---|---|
| | | 5 | 6 | 7 | 8 |
| Vinyl chloride resin (A) | | 100 | 100 | 100 | 100 |
| Acrylic block copolymers (B) | B-1 | 80 | 15 | 180 | |
| | B-2 | | | | |
| | B-3 | | | | |
| | B-4 | | | | |
| | B-5 | | | | |
| | B-6 | | | | |
| | B-7 | | | | |
| Gelation accelerators (C) | C-1 | | 0 | 0 | 0 |
| | C-2 | 20 | | | |
| Plasticizers | DINP | | | | 60 |
| | PN1030 | | | | |
| Stabilizers | EMBILIZER OT-4 | 1 | 1 | 1 | 1 |
| | EMBILIZER OP-3 | 1 | 1 | 1 | 1 |
| Lubricant | Calcium stearate | 0.5 | 0.5 | 0.5 | 0.5 |
| Kneadability | --- | CC | AA | CC | AA |
| Resistance to whitening on bending | --- | AA | CC | CC | AA |
| Flexibility | Value of type A hardness after 15 seconds [-] | 84 | 96 | 52 | 80 |
| Fogging tendency | Glass haze [%] | 7.7 | 4.3 | 9.5 | 30.5 |
| Thermal aging resistance | Rate [%] of weight change | -2.0% | -2.0% | -1.4% | -19.0% |
| Migration tendency | Rate [%] of weight change of PMMA | <0.5% | <0.5% | <0.5% | Unmeasurable |
| Low-temperature characteristics | 50% Impact brittleness temperature [°C] | -13 | 8 | 12 | -42 |
| Electrical characteristics | Volume resistivity [×10¹¹ Ω·cm] | 2.7 | 5.2 | 3.8 | 1.7 |
| Printability | --- | AA | AA | AA | CC |

### (Concluded)

| | | Comparative Examples | | | | |
|---|---|---|---|---|---|---|
| | | 9 | 10 | 11 | 12 | 13 |
| Vinyl chloride resin (A) | | 100 | 100 | 100 | 100 | 100 |
| Acrylic block copolymers (B) | B-1 | | 15 | | | |
| | B-2 | | | | | |
| | B-3 | | | | | |
| | B-4 | | | 80 | | |
| | B-5 | | | | 80 | |
| | B-6 | | | | | 80 |
| | B-7 | | | | | |
| Gelation accelerators (C) | C-1 | 0 | 0 | 10 | 10 | 10 |
| | C-2 | | | | | |
| Plasticizers | DINP | | 45 | | | |
| | PN1030 | 60 | | | | |
| Stabilizers | EMBILIZER OT-4 | 1 | 1 | 1 | 1 | 1 |
| | EMBILIZER OP-3 | 1 | 1 | 1 | 1 | 1 |
| Lubricant | Calcium stearate | 0.5 | 0.5 | 0.5 | 0.5 | 0.5 |
| Kneadability | --- | AA | AA | CC | CC | AA |
| Resistance to whitening on bending | --- | AA | AA | CC | CC | AA |
| Flexibility | Value of type A hardness after 15 seconds [-] | 88 | 82 | 80 | 75 | 95 |
| Fogging tendency | Glass haze [%] | 16.8 | 26.2 | 8.9 | 9.1 | 8.5 |
| Thermal aging resistance | Rate [%] of weight change | -3.5% | -15.0% | -1.9% | -1.9% | -1.8% |
| Migration tendency | Rate [%] of weight change of PMMA | 1.2% | 2.3% | <0.5% | <0.5% | <0.5% |
| Low-temperature characteristics | 50% Impact brittleness temperature [°C] | -17 | -34 | -9 | -12 | 0 |
| Electrical characteristics | Volume resistivity [×10¹¹ Ω·cm] | 5.0 | 2.0 | 2.7 | 2.8 | 2.7 |
| Printability | --- | CC | CC | AA | AA | AA |

From Table 2, the vinyl chloride resin compositions from Examples 1 to 9 of the present invention attained excellent kneadability, resistance to whitening on bending, flexibility, fogging resistance, thermal aging resistance, migration resistance, low-temperature characteristics, electrical characteristics and printability, that is, were excellent in the properties required for shaped articles of the vinyl chloride resin compositions of the present invention.

Comparative Examples 1, 2 and 4 resulted in poor kneadability and low resistance to whitening on bending. Because the amount of the gelation accelerator (C) added was below the range of the present invention or because no gelation accelerator (C) was added, sufficient shearing was not applied during melt-kneading and the vinyl chloride resin partly remained unkneaded.

In Comparative Examples 3 and 5, kneadability and flexibility were inferior. Because the amount of the gelation accelerator (C) added was larger than the range of the present invention, excessively high shearing was applied during melt-kneading and the vinyl chloride resin was decomposed to cause foaming.

Comparative Example 6 attained excellent kneadability during melt-kneading but resulted in low resistance to whitening on bending and poor flexibility because the amount of the acrylic block copolymer (B) added was below the range of the present invention.

In Comparative Example 7, the kneadability and the resistance to whitening on bending were inferior. Because the amount of the acrylic block copolymer (B) added was larger than the range of the present invention and no gelation accelerator (C) was added, sufficient shearing was not applied during melt-kneading and the vinyl chloride resin partly remained unkneaded.

The compositions of Comparative Examples 8 to 10 contained no acrylic block copolymer (B) or a smaller amount of the acrylic block copolymer (B) than specified in the present invention. These compositions exhibited excellent kneadability during melt-kneading owing to the addition of a plasticizer, but were poor in fogging resistance, thermal aging resistance, migration resistance and printability. Further, the compositions of Comparative Examples 8 and 10 were relatively poor also in electrical characteristics.

In Comparative Examples 11 and 12, the kneadability and the resistance to whitening on bending were inferior. Because the molecular weight of the acrylic block copolymer (B) was less than 100,000, the melt viscosity was low at the time of melt-kneading and the vinyl chloride resin was not sufficiently sheared and partly remained unkneaded.

Comparative Example 13 resulted in poor flexibility because the content of the polymer blocks (b2) in the acrylic block copolymer (B) was more than 25 mass%.

### INDUSTRIAL APPLICABILITY

The vinyl chloride resin compositions of the present invention, and shaped articles formed of the vinyl chloride resin composition are useful in that they are excellent in kneadability, resistance to whitening on bending, flexibility, fogging resistance, thermal aging resistance, migration resistance, low-temperature characteristics, electrical characteristics and printability, and realize small migration of plasticizer to adherends, minor fogging, and stable properties over a long period of time.

## Claims

1. A vinyl chloride resin composition comprising a vinyl chloride resin (A), an acrylic block copolymer (B) comprising a polymer block (b1) including acrylic acid ester units and a polymer block (b2) including methacrylic acid ester units, and a gelation accelerator (C), wherein the weight average molecular weight of the acrylic block copolymer (B), as determined according to the method indicated in the description, is in the range of 100,000 to 250,000, the content of the polymer block (b2) in the acrylic block copolymer (B) is in the range of 10 to 25 mass%, and the vinyl chloride resin composition contains 20 to 150 parts by mass of the acrylic block copolymer (B) and 4 to 18 parts by mass of the gelation accelerator (C) with respect to 100 parts by mass of the vinyl chloride resin (A).

2. The vinyl chloride resin composition according to claim 1, wherein the acrylic block copolymer (B) is a triblock copolymer in which two of the polymer blocks (b2) are bonded to respective ends of the polymer block (b1).

3. The vinyl chloride resin composition according to claim 1 or 2, wherein the molecular weight distribution of the acrylic block copolymer (B), as determined according to the method indicated in the description, is in the range of 1.0 to 1.4.

4. The vinyl chloride resin composition according to any one of claims 1 to 3, wherein the gelation accelerator (C) is a gelation accelerator (C1) comprising a (meth)acrylic acid acrylic polymer.

5. A shaped article comprising the vinyl chloride resin composition described in any one of claims 1 to 4.

## Patentansprüche

1. Vinylchloridharzzusammensetzung, umfassend ein Vinylchloridharz (A), ein Acrylblockcopolymer (B), umfassend einen Polymerblock (b1), der Acrylsäureestereinheiten enthält, und einen Polymerblock (b2), der Methacrylsäureestereinheiten enthält, und einen Gelationsbeschleuniger (C), wobei das gewichtsgemittelte Molekulargewicht des Acrylblockcopolymers (B), bestimmt nach dem in der Beschreibung angegebenen Verfahren, in dem Bereich von 100000 bis 250000 liegt, der Gehalt des Polymerblocks (b2) in dem Acrylblockcopolymer (B) in dem Bereich von 10 bis 25 Massen-% liegt, und die Vinylchloridharzzusammensetzung 20 bis 150 Masseteile des Acrylblockcopolymers (B) und 4 bis 18 Masseteile des Gelationsbeschleunigers (C) bezogen auf 100 Masseteile des Vinylchloridharzes (A) enthält.

2. Vinylchloridharzzusammensetzung nach Anspruch 1, wobei das Acrylblockcopolymer (B) ein Triblockcopolymer ist, in welchem zwei der Polymerblöcke (b2) an jeweiligen Enden des Polymerblocks (b1) gebunden sind.

3. Vinylchloridharzzusammensetzung nach Anspruch 1 oder 2, wobei die Molekulargewichtsverteilung des Acrylblockcopolymers (B), bestimmt nach dem in der Beschreibung angegebenen Verfahren, in dem Bereich von 1,0 bis 1,4 liegt.

4. Vinylchloridharzzusammensetzung nach einem der Ansprüche 1 bis 3, wobei der Gelationsbeschleuniger (C) ein Gelationsbeschleuniger (C1) ist, der ein (Meth)acryl-säureacrylpolymer umfasst.

5. Formkörper, der die in einem der Ansprüche 1 bis 4 beschriebene Vinylchloridharzzusammensetzung umfasst.

## Revendications

1. Composition de résine de chlorure de vinyle comprenant une résine de chlorure de vinyle (A), un copolymère à blocs acrylique (B) comprenant un bloc polymère (b1) incluant des unités d'ester d'acide acrylique et un bloc polymère (b2) incluant des unités d'ester d'acide méthacrylique, et un accélérateur de gélation (C), dans laquelle le poids moléculaire moyen en poids du copolymère à blocs acrylique (B), tel que déterminé conformément au procédé indiqué dans la description, est dans la plage de 100 000 à 250 000, la teneur en le bloc polymère (b2) dans le copolymère à blocs acrylique (B) est dans la plage de 10 à 25 % en masse, et la composition de résine de chlorure de vinyle contient 20 à 150 parties en masse du copolymère à blocs acrylique (B) et 4 à 18 parties en masse de l'accélérateur de gélation (C) par rapport à 100 parties en masse de la résine de chlorure de vinyle (A).

2. Composition de résine de chlorure de vinyle selon la revendication 1, dans laquelle le copolymère à blocs acrylique (B) est un copolymère tribloc dans lequel deux des blocs polymères (b2) sont liés à des extrémités respectives du bloc polymère (b1).

3. Composition de résine de chlorure de vinyle selon la revendication 1 ou 2, dans laquelle la distribution de poids moléculaires du copolymère à blocs acrylique (B), telle que déterminée conformément au procédé indiqué dans la description, est dans la plage de 1,0 à 1,4.

4. Composition de résine de chlorure de vinyle selon l'une quelconque des revendications 1 à 3, dans laquelle l'accélérateur de gélation (C) est un accélérateur de gélation (C1) comprenant un polymère acrylique d'acide (méth)acrylique.

5. Article mis en forme comprenant la composition de résine de chlorure de vinyle selon l'une quelconque des revendications 1 à 4.
